(19) Europäisches Patentamt
European Patent Office
Office européen des brevets

(11) **EP 1 033 610 B1**

(12) **EUROPEAN PATENT SPECIFICATION**

(45) Date of publication and mention
of the grant of the patent:
**15.10.2003 Bulletin 2003/42**

(51) Int Cl.⁷: **G03B 17/18**, G03B 1/04,
G03B 17/36, G03B 17/24

(21) Application number: **00111652.4**

(22) Date of filing: **25.08.1989**

(54) **Photographic camera systems and film cassettes**

Photographische Kamerasysteme und Filmpatronen

Appareils photographiques et cartouches de film photographique

(84) Designated Contracting States:
**DE FR GB**

(30) Priority: **31.08.1988 JP 21782588**
**31.08.1988 JP 21782688**
**02.09.1988 JP 21974088**

(43) Date of publication of application:
**06.09.2000 Bulletin 2000/36**

(62) Document number(s) of the earlier application(s) in
accordance with Art. 76 EPC:
**99115811.4 / 0 959 382**
**94109284.3 / 0 616 244**

(73) Proprietor: **SONY CORPORATION**
**Tokyo (JP)**

(72) Inventor: **Murakami, Susumu,**
**c/o Sony Corporation**
**Tokyo (JP)**

(74) Representative: **DeVile, Jonathan Mark, Dr. et al**
**D. Young & Co.,**
**21 New Fetter Lane**
**London EC4A 1DA (GB)**

(56) References cited:
**GB-A- 2 084 746        US-A- 3 678 834**
**US-A- 4 401 376        US-A- 4 693 591**
**US-A- 4 701 046        US-A- 4 705 372**

• **Research Disclosure 23944, March 1984,**
**"Magnetically Positioned Photographic Film",**
**disclosed by H. J. Krall**

## Description

This invention relates to photographic camera systems and to film cassettes.

A photographic film now widely used is 35mm wide, and the photo-sensitive materials for forming such a photographic film are standardized by the International Organization of Standards (ISO). In such a film, the width between the-outer edges of the film is 35mm, and a plurality of rectangular perforations are aligned along each edge of the film. The perforations are used to transport the film as it is exposed, and they may also be used during the development and printing processes. The dimension of each perforation in the widthwise direction of the film is 2.79mm and the dimension in the lengthwise direction of the film is 1.98mm. The distance between each perforation and the edge of the film is 2.01mm, and the distance between the opposing perforations in respective sides of the film is 25mm. The pitch of the perforations is 4.75mm.

In such film, each frame, which is the effective photographic area, is rectangular in shape and is 24mm in the widthwise direction of the film. The pitch of the frames is 38mm, which is eight times the pitch of the perforations which is taken as a reference.

In order to improve the image quality obtained from such film the following proposals have been made: (1) the photo-sensitive material should be improved to improve resolution; and (2) the width of the film should be increased to increase the frame size, so that resulting prints would require less enlargement and would appear sharper.

In general, the particle size of the photo-sensitive material coated on the film determines the resolution and the sensitivity of the film, and these two parameters are inversely related. Hence, without the discovery of a new photo-sensitive material, it is difficult to improve the image quality according to proposal (1).

Proposal (2) involves an increase in the width of the photographic film. Thus, the camera must necessarily also be increased in size and weight, which goes contrary to the recent trend that seeks to reduce the size and weight of cameras. Furthermore, all existing equipment for manufacturing and for developing film would have to be modified to correspond to the increased width.

Two other proposals that have been made involve changes to the camera: (3) the size or portion of the image that is picked-up can be changed by changing the magnification of the lens attached to the camera body; and (4) the effective photographic area on the film can be increased by recording magnification control data for the printing equipment in an area between the frames.

Proposal (3) requires an expensive lens, such as a telephoto lens.

Proposal (4) is disclosed in US patent specification US-A-4 780 735. Close-up photography is in effect achieved without requiring an expensive zoom lens by limiting the photographic area of the film. On printing this limited area, the magnification is increased so that an apparent close-up is effected whilst utilizing a standard lens. US-A-4 780 735 also discloses a technique in which a 17-bit code, namely, control information for the magnification, date information, and the like is recorded in the blank area between successive frames.

One problem with this, however, is that if slide film is used, the area between the frames is covered when a slide support frame is attached to the frame after development. If the film used is a negative film, then the film has to be kept un-cut to avoid losing the data.

The British Journal of Photography of 21 December 1979 discusses 35mm film format and proposes a 35mm wide film devoid of sprocket perforations but rejects such a film as a commercially viable proposition on the grounds that it would make existing 35mm cameras obsolete.

Research Disclosure 23944 (1984) by H J Krall entitled "Magnetically Positioned Photographic Film" discloses the idea of controlling the positioning of a film in a camera for exposure and projection by using magnetically coded information recorded on the photographic film in magnetic particles distributed across the film image area or in a narrow stripe along the film edge. Such information can obviate the need for perforations or sprocket holes in the film thereby allowing a higher percentage of film area to be used as image area.

The present invention provides a camera according to claim 1.

The invention will now be described by way of example with reference to the accompanying drawings, throughout which like parts are referred to by like references, and in which:

Figure 1 is a plan view of a portion of a 35mm wide photographic film;
Figure 2 is a plan view of another 35mm wide photographic film;
Figure 3 is a plan view in partial cross-section of an embodiment of 35mm camera system according to the present invention;
Figure 4 is a rear elevational view of the camera of Figure 3 with the rear cover removed;
Figure 5 is a perspective view of a film transporting mechanism and detecting mechanism in the camera of Figure 3;
Figure 6 is an exploded perspective view showing the detecting mechanism of Figure 5 in more detail;
Figure 7 is an enlarged, cross-sectional view on line 7-7 in Figure 4 with film loaded in the camera;
Figure 8 is a front elevational view of an example of a film pressure plate used in the camera of Figure 3;
Figure 9 is a block diagram of an example of the film transporting system used in the camera of Figure 3;
Figure 10 is a schematic diagram of an example of a film transport detecting circuit used in the film transporting system of Figure 9;

Figures 11A to 11D are waveform diagrams of signals present in the operation of the film transport detecting circuit of Figure 10;

Figure 12 is a rear elevational view of another example of film transport detecting mechanism;

Figure 13 is an enlarged, cross-sectional view on line 13-13 in Figure 12;

Figure 14 is a front elevational view of another example of film pressure plate;

Figures 15A and 15B are elevational views of a data recording system;

Figure 16 is a plan view of a portion of film in which photographic data are recorded;

Figures 17A to 17G and 17H are, respectively, schematic diagrams showing examples of various recorded data, and numerals and characters used to record the data;

Figures 18A to 18D are plan views of a portion of film in which the minimum detection value of a film transport amount is 5.25mm;

Figures 19A to 19D are plan views of a portion of film in which the minimum detection value of the film transport amount is 6.28mm;

Figure 20A is a plan view of a portion of a 35mm wide photographic film having perforations, in which the minimum detection value of the film transport amount is 5.25mm; and

Figure 20B is a plan view of a portion of a 35mm photographic film having perforations, in which the minimum detection value of the film transport amount is 6.28mm.

A known 35mm photographic film will first be considered, then it will be explained how to increase the effective photographic area of film in its widthwise direction by eliminating the perforations. The manner in which the flatness of the film is maintained by using the portions outside the effective photographic area thereof will be considered next. Then the problem of how to transport the film accurately by a predetermined pitch, even although the perforations are absent, will be discussed. Lastly, how to make effective use of the film outside the effective photographic area by the elimination of the perforations will be explained.

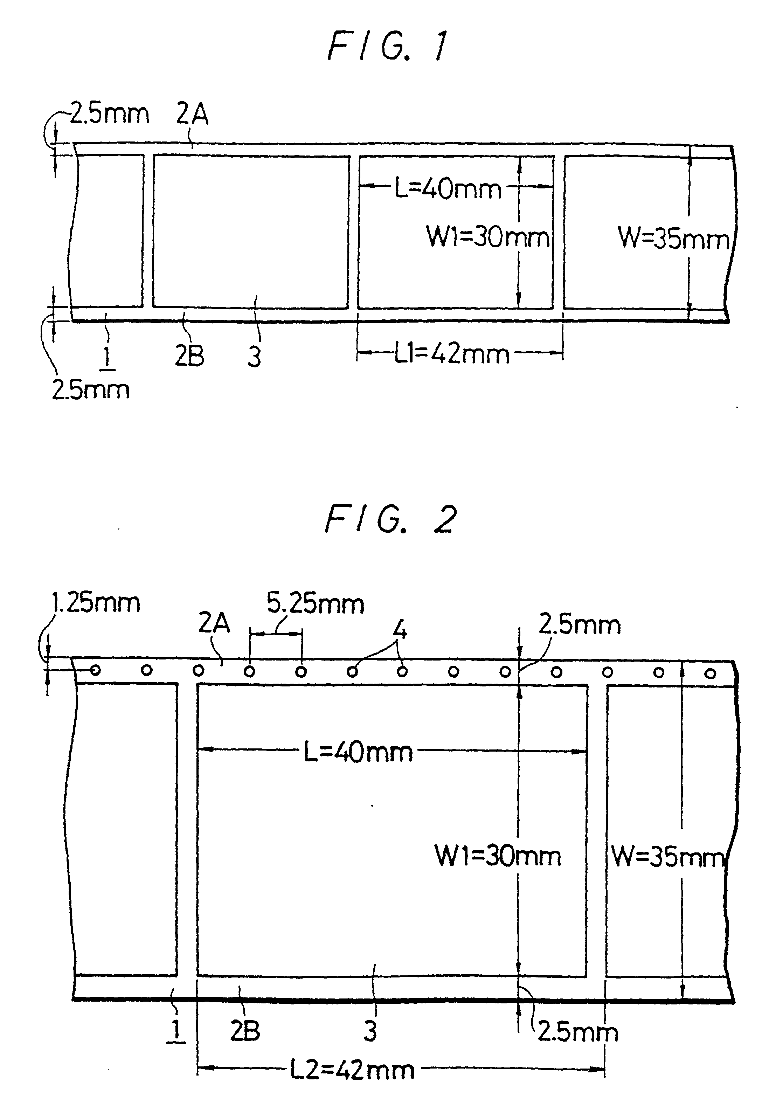

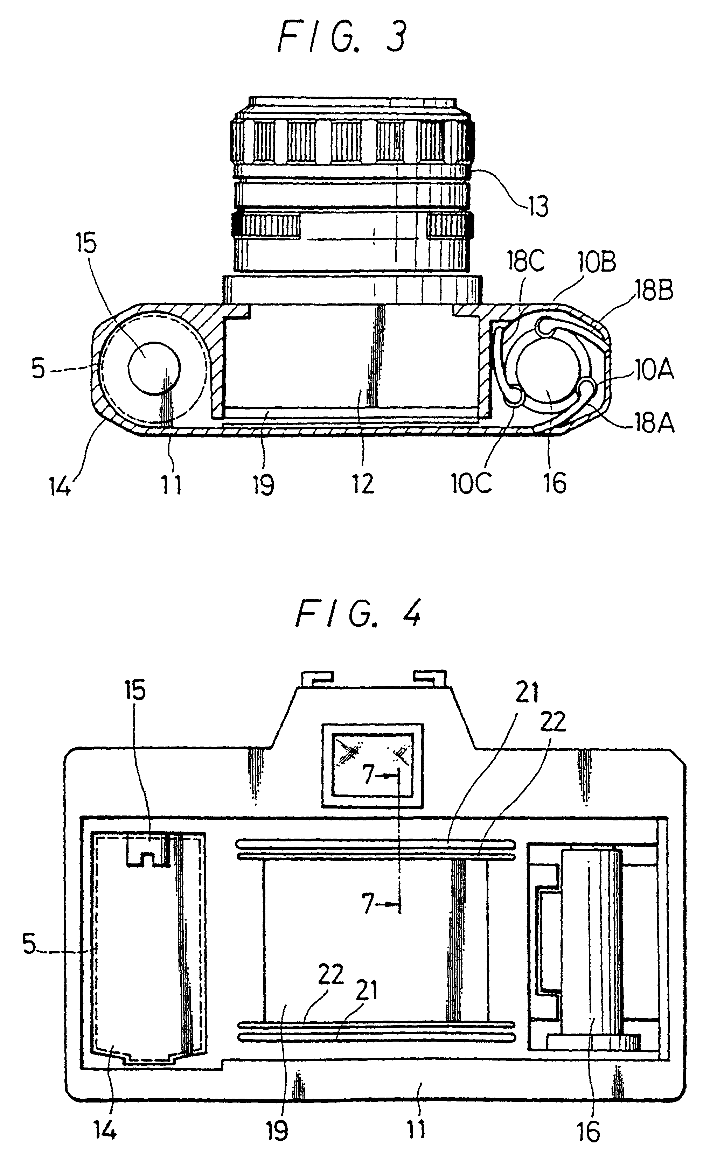

In Figure 1, a photographic film 1 has a width the same as commercially available photographic film, namely 35mm, but is not provided with perforations. A frame 3 in the film 1 defines an effective photographic area whose effective width W1 in the film-width direction is selected to be 30mm, and whose effective length L in the lengthwise or film-transporting direction of the film 1 is selected to be 40mm. A pitch L1 of the frame 3, which is the transport pitch of the film 1. is selected to be 42mm. The film 1 having the above-mentioned film format is accommodated in a film cassette 5, as shown in Figures 3 and 4.

The width W1 of the frame 3 of the film 1 is 1.25 times as large as that (24mm) of the frame of existing photographic film. The image quality of the frame 3 in the film-width direction is therefore increased by 25% over existing film.

If the length L of the frame 3 were increased by the same ratio as the width W1, then the area of the frame 3 would be 1.56 (1.25 x 1.25) times the area of a frame of existing film. Thus, the available image quality could be improved by about 56%.

If the area of the frame 3 of the film 1 were:

$$30mm \times 40mm = 1200mm^2$$

whereas, the area of the frame of the existing film is:

$$24mm \times 36mm = 864mm^2$$

then the area of the frame 3 would be increased by about 39% compared with the area of a frame of existing film, and the available image quality could be increased by about 39% compared with existing film.

Thus, if an image of the same image quality as that of existing photographic film is to be produced, it becomes possible to provide a larger picture or, alternatively, it is possible to use less magnification to provide the same size picture, thereby resulting in a sharper picture.

The overall width W of the film 1 is selected to be the same as that of the existing 35mm wide photographic film so that facilities such as existing photographic film manufacturing apparatus, and apparatus for developing photographic film, can be utilized without any modifications or changes being required. For example, apparatus for slitting wide photo-sensitive film on which photo-sensitive material has been coated, to form photographic film 35mm wide; apparatus for manufacturing a standard 35mm film cassette; and apparatus for winding the film into the cassette can be utilized without modification. Moreover, the existing apparatus for developing, printing and enlarging can be used.

Since the width W1 of the frame 3 is selected to be 30mm, band-shaped non-photographic areas 2A and 2B each having a width of 2.5mm are respectively provided between the edges of the frames 3 and the edges of the film 1, and these areas 2A and 2B make it possible to maintain the flatness of the film 1, to control the film 1, and to read and write data. Moreover, the camera needs no sprockets to transport the film, and can as a result be made compact in size and light in weight.

Figure 2 shows another photographic film 1, in which the width W is again 35mm, and a plurality of small apertures 4 are formed through the film 1 along the non-photographic area 2A. The apertures 4 are used to detect the transport distance of the film 1 as it is advanced. The format is similar to that of the film 1 of Figure 1, namely, the frame 3 has an effective photographic area that is 30mm in width W1 and 40mm in length L. The apertures may each have a diameter of 1mm, and be aligned at approximately 1.25mm from one edge of the film 1, namely on the central line between an edge of the film 1 and the adjacent edge of the frame 3, at a predetermined pitch of, for example, 5.25mm. The apertures 4 may also be arranged in the other non-photographic area 2B. As is described below only one aperture 4 may be provided per frame or the aperture 4 may be replaced with a magnetic mark or the like. The apertures 4 are used, when the film 1 is transported in a camera body, to form the frames 3 at a predetermined pitch of, for example, 42mm. More specifically, when the counted number of the apertures 4 reaches a predetermined value, the transport of the film 1 is stopped.

Figure 3 is a partial cross-sectional view of an embodiment of photographic camera for a system according to the present invention, and Figure 4 is a rear view of the camera with its rear cover removed.

Referring to Figure 3, a light-tight chamber 12 is located at a central portion of a camera body 11, and a lens system 13 is mounted at the front opening portion of the chamber 12. A film cassette accommodating space 14 is formed at one side portion of the camera body 11, for example, on the left-hand side in Figures 3 and 4, and a spool shaft 15 is aligned with the centre of the space 14. When the photographer loads the camera, a cassette 5 containing the above-described photographic film 1 is set in the space 14, so as to engage with the spool shaft 15.

A film take-up shaft 16 is mounted on the other side of the camera body 11, for example, on the right-hand side in Figures 3 and 4. The shaft 16 is driven to wind the film 1, preferably by a motor (not shown).

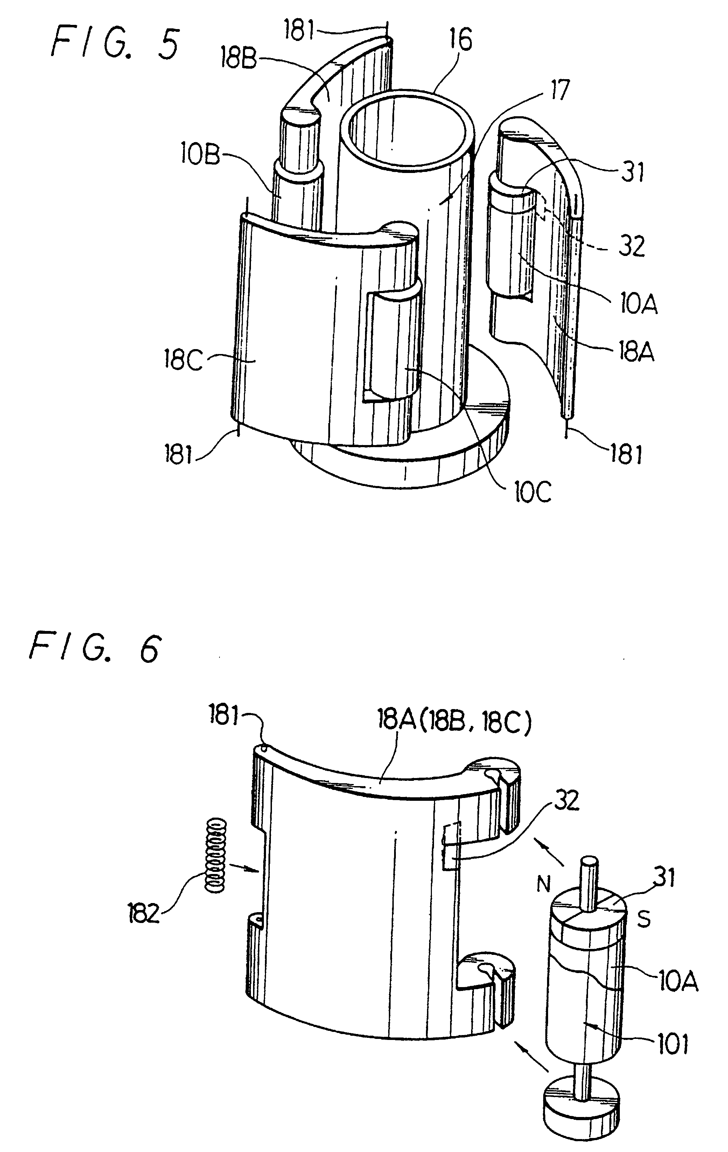

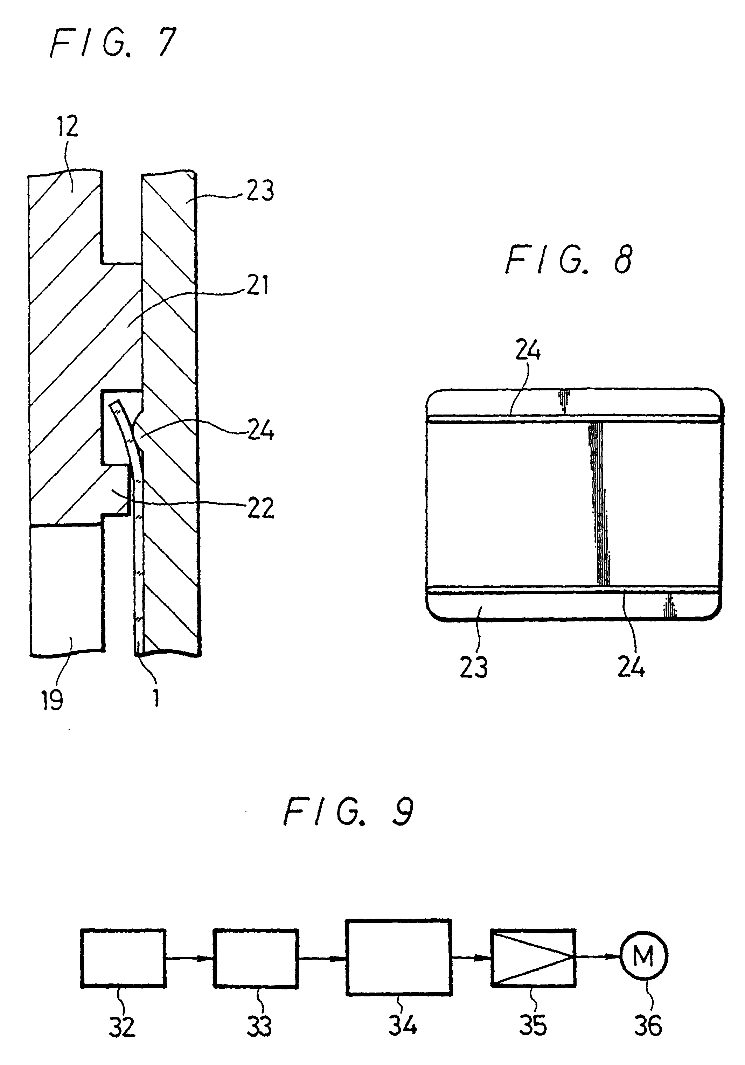

As shown in Figure 5, the peripheral surface of the take-up shaft 16 is coated with a high friction material 17 such as neoprene, and, for example, three film guides 18A to 18C are arranged around the shaft 16. Each of the guides 18A to 18C provides a linear surface parallel to the central axis of the shaft 16 and provides an arcuate surface in the direction perpendicular to the central axis of the shaft 16. As shown in Figure 6, one end portion 181 of each of the film guides 18A to 18C is pivotably supported on the camera body 11, and the other end thereof is spring-biased towards the shaft 16 by a torsion spring 182 located at the pivoted end. Film guide rollers 10A to 10C are rotatably supported in the film guides 18A to 18C at the respective end portions adjacent to the shaft 16, so that they are arranged parallel to the central axis of the shaft 16.

The structure of the film guides 18A, 18B and 18C is shown in more detail in Figure 6, in which the roller 10A of the film guide 18A has a predetermined diameter, and a permanent magnet 31 is secured to one end, for example, the top of the roller 10A. The magnet 31 is magnetized with N and S poles in its radial direction, and the film guide 18A has a magnetic sensor 32, for example, a Hall element, mounted at a position opposing the magnet 31.

Referring back to Figures 3 and 4, it will be seen that through the rear portion of the chamber 12 there is formed a quadrilateral or rectangular aperture 19. The aperture 19 has a length of 30mm (in the widthwise direction of the film 1) to define the frame 3 on the film 1. As will be described, when the photographer takes a picture, the aperture 19 does not come into close contact with the film 1, and the light arriving through the lens system 13 incident on the film 1 is not collimated, so that while the size of the frame 3 is 30mm x 40mm, the size of the aperture 9 is slightly smaller than 30 x 40mm.

As shown in Figure 7, which is an enlarged, cross-sectional view on line 7-7 in Figure 4, two pairs of film guide rails 21 and 22 are respectively formed on the rearwardly facing, inner surface of the chamber 12 along, and at least over the portions corresponding to the top and bottom edges of the aperture 19. The rails 21 are located apart from each other by an inside distance substantially equal to 35mm. so as to define the position of the film 1 in its widthwise direction relative to the aperture 19. The rails 21 are formed parallel with each other and are also made thicker than the inside rails 22 by an amount at least equal to the thickness of the film 1. The rails 22 are respectively formed near the upper and lower edge portions of the aperture 19 and parallel therewith.

A film pressure plate 23 in Figure 8 is attached to the inner or front surface of the rear cover (not shown) of the camera body 11 by some suitable means, such as a pressure spring, for example. A pair of rails 24, each having a predetermined height, are respectively mounted on the front surface of the pressure plate 23 at positions corresponding to the locations between the film guide rails 21 and 22 and parallel to the rails 21. The location of the film 1 is defined by the rails 22 in a widthwise direction, and the rails 24 contact the upper and lower edge portions of the film 1 in the forward direction or left-hand direction of Figure 7, so that the remaining portion of the film 1, that is, the area of the frame 3, is brought into close contact with the pressure plate 23. The rails 24 are not essential in order to provide flat contact between the film 1 and the pressure plate 23.

Accordingly, even although the frame 3 is 30mm long in a widthwise direction, and each of the areas between the edges of the frame 3 and the edges of the film 1 is only 2.5mm wide, the film area corresponding to the frame 3 can be given the necessary flatness by the pressure plate 23.

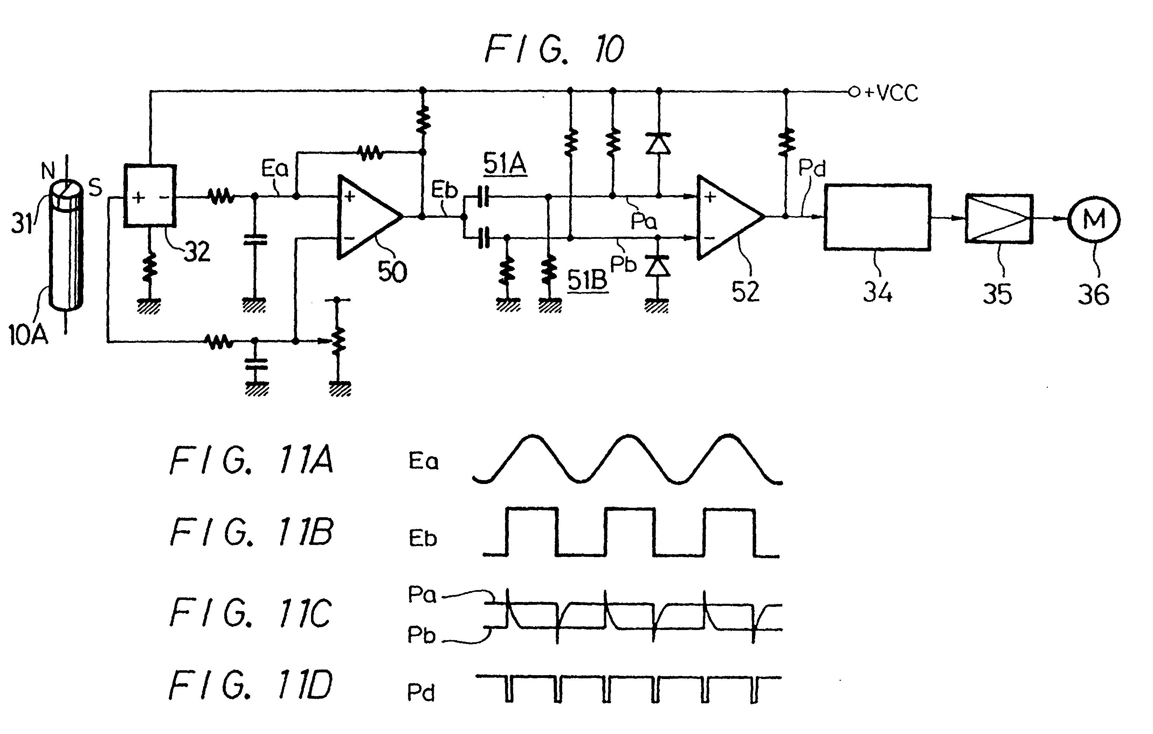

It should be understood that other elements, such as a viewfinder, exposure control, shutter, and the like of the camera can be formed similarly to those of existing photographic cameras. The present camera may however be provided with a film transport amount detecting circuit as shown, for example, in Figures 9 and 10.

When the photographer prepares to take a picture, the cassette 5 is set in the space 14 and the film 1 is withdrawn from the cassette 5 across the aperture 19 to the take-up shaft 16, so that, by means of the film guides 18A to 18C and the film guide rollers 10A to 10C, when the shaft 16 is rotated, the film 1 is wound around the shaft 16. Thus, the film 1 can be transported without requiring film transporting perforations.

When the film 1 is transported, the rollers 10A to 10C and the magnet 31 are rotated in accordance with the movement of the film 1. The rotation of the magnet 31 is detected by the sensor 32, and the detected output is counted by a counter 33, the count from which is supplied to a system controller 34 (formed of a microcomputer), as shown in Figure 9. As is described below, photographic data may be recorded in the non-photographic area between the edge of the photographic film and the frame, and data indicating the type of film may be previously recorded therein. The aperture 4 may be replaced with a magnetic mark or the like and the magnetic sensor 32 may be mounted on the rear cover or on the pressure plate. The system controller 34 is used to control the operation of the entire camera, for example, to determine the aperture and shutter speed. Because the roller 10A of the film guide 18A is rotated one revolution per predetermined transport amount of the film 1, the amount of the film 1 being transported is detected on the basis of the count of the counter 33. Then, the rotation of a drive motor 36, which drives the take-up shaft 16, is controlled through a motor drive amplifier 35, so that the transport corresponds to the count value, to determine the size of the frame 3.

Figure 10 is an example of a detecting circuit that detects the transport amount of the film 1. Assuming that the film transport pitch corresponding to the frame 3 is 42.0mm, then:

$$42.0mm = 5.25mm \times 8$$

That is, the film transport pitch is selected to be equal to an integral multiple of the minimum detectable value of film transport. In other words, the diameter of the roller 10A is determined so that the minimum detection value of the film transport is 5.25mm. Since:

$$5.25mm = \pi \times 3.34mm/2$$

Thus, when the diameter of the detection roller 10A is 3.34mm, the transport amount of the film 1 corresponds to one-half revolution of the roller 10A. As seen from Figure 6, the magnet 31 is formed as a dipole doughnut shape.

The Hall element or magnetic sensor 32 senses the magnet 31 and generates a detected voltage Ea that changes in amplitude in response to revolutions of the magnet 31, as shown in Figure 11A. As shown in Figure 10, the voltage Ea is supplied to a voltage comparing circuit 50, wherein it is waveform-shaped to a square wave voltage Eb, having a period corresponding to the revolutions of the magnet 31, as represented by the waveform Eb in Figure 11B. The voltage Eb is supplied to differentiating circuits 51A and 51B that generate differentiated pulses Pa and Pb which correspond respectively to the trailing and leading edges of the voltage waveform Eb, and are shown in Figure 11C.

The pulses Pa and Pb are supplied to a voltage comparing circuit 52 that generates one pulse Pd at every half period of the voltage Ea, or at every one-half revolution of the magnet 31, and the pulse Pd are shown in Figure 110. This pulse signal Pd is supplied to the system controller 34.

The system controller 34 controls the operation of the entire camera, as earlier noted. Each time the roller 10A of the film guide 18A rotates by one-half turn, the film 1 is transported a length equal to 5.25mm. Thus, the system controller 34 controls the drive motor 36, so that the number of the pulses Pd equals the count value corresponding to the size of the frame 3. For example, if the pitch is 42mm, the film 1 is transported until eight pulses Pd are obtained and the film 1 is therefore transported at the pitch of one frame 3 corresponding to the above-described format.

In the camera with this structure of the film guidance structure and the film transport detecting circuit, even if the perforations used to transport the photographic film 1 are not present, the film can be transported at the correct frame pitch. Furthermore, the magnet 31 for detecting the transport amount of the film 1 is a dipole magnet, which is cheap.

In the film transport detecting circuit of Figure 10, the leading and trailing edges of the resultant voltage Eb are both counted to detect the amount of the film 1 transported. Thus, even when the magnet 31 is a dipole magnet, the revolution provided when the detection roller 10A detects the amount of film 1 that is transported can be one-half revolution.

When the diameter of the detection roller 10A is small, slip between the film 1 and the detection roller 10A becomes large, thus resulting in a lowering of detection accuracy. When the diameter of the roller 10A is large, however, the roller 10A needs a large torque to transport the film 1. Thus, unless the motor size is increased, the slip between the film 1 and the roller 10A also becomes large, whereby the detection accuracy is lowered in this case too. Nevertheless, we have found that if the diameter of the roller 10A is 3.34mm as described above, this problem does not occur, and the amount of the film 1 being transported can be correctly detected.

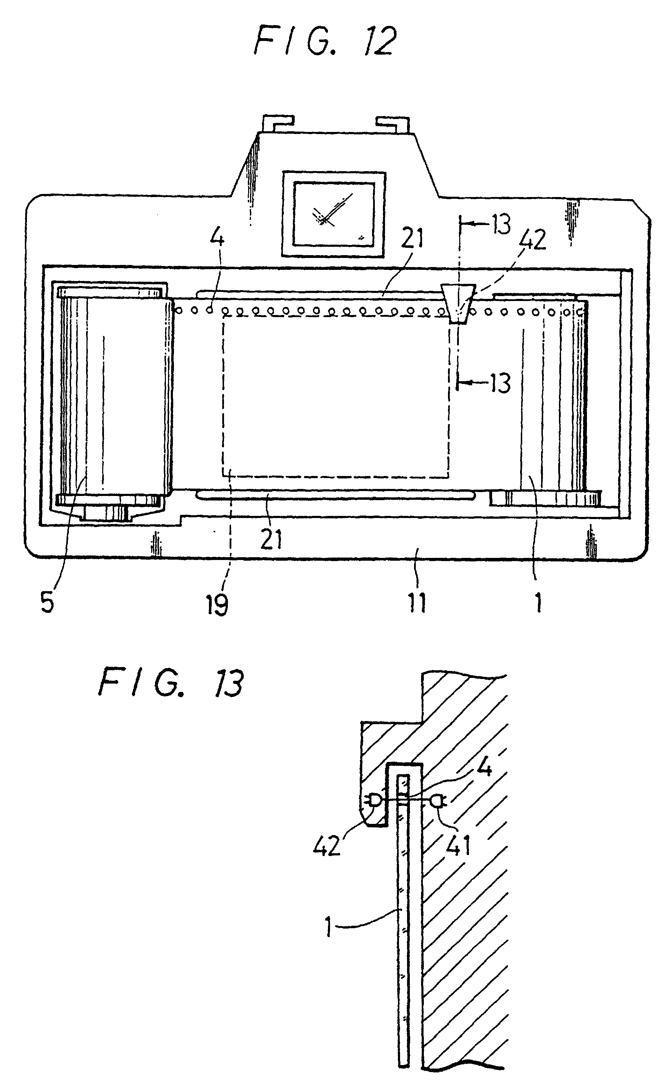

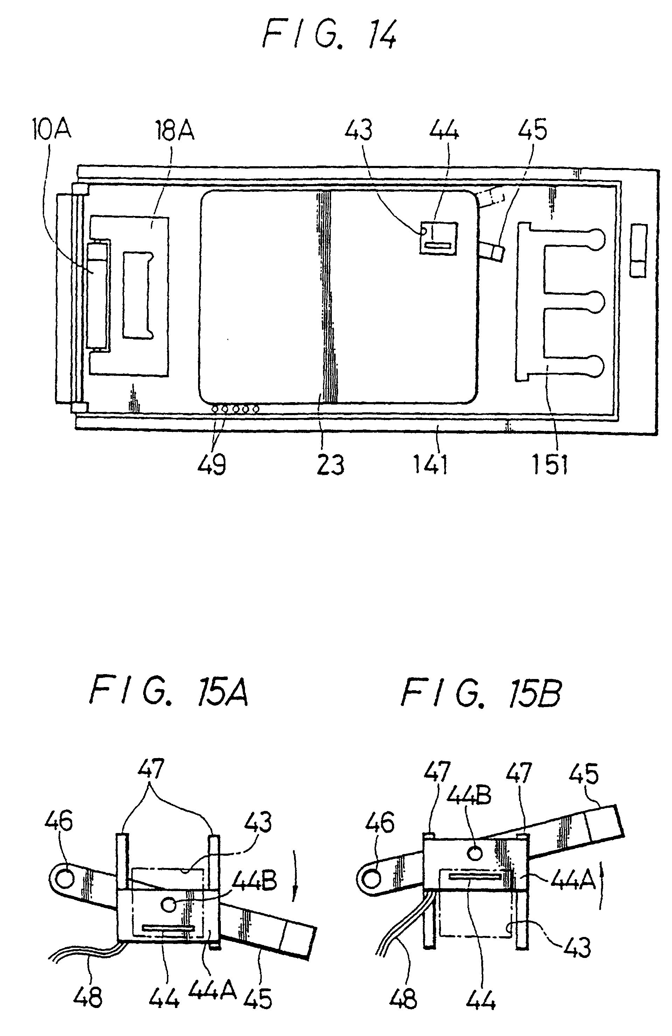

Another example of a detector for detecting the transport of the film 1 will be described with reference to Figures 12 and 13. Figure 12 is a rear view of the camera with the film 1 loaded and the rear cover removed. Figure 13 is an enlarged, cross-sectional view on line 13-13 in Figure 12. In each of Figures 12 and 13, there is employed the film 1 having the format with the plurality of small apertures 4 as shown in Figure 2.

Referring to Figures 12 and 13, a light emitting diode (LED) 41 of the photo-interrupter kind, and a photo-transistor 42 are mounted on the camera body 11 at a position downstream of the film 1 at a location corresponding to the upper edge portion of the aperture 19, so that the LED 41 and the photo-transistor 42 sandwich the apertures 4. The light emission wavelength of the LED 41 and the sensitivity peak of the photo-transistor 42 are selected to be in the infra-red ray wavelength range, for example, 940 nanometres.

In general, because photographic film has a low transmissivity for infra-red rays, as compared with visible light, a level difference between the output from the photo-transistor 42 at an aperture 4 and other portions is enhanced, thereby making it possible positively to detect an aperture 4. Further, the LED 41 emits only infra-red light rays, thereby preventing the film 1 from being fogged.

Thus, when the film 1 is transported, the infra-red light rays emitted from the LED 41 and received at the photo-transistor 42 are interrupted in accordance with the movement of the apertures 4, whereby the photo-transistor 42 generates a detection pulse that indicates the movement of each aperture 4. By supplying this pulse to the counter 33 in the detecting circuit of Figure 9, it is possible to control the transport amount of the film 1 as described above.

Figure 14 shows another example of the film pressure plate 23 attached to the inner surface of the rear cover of the camera body, in which the film pressure plate 23 is attached to the front or inner surface of the rear cover 41 at a location opposing the aperture 19 of Figure 12 in the camera body 11. The pressure plate 23 is larger than the aperture 19, is quadrilateral or rectangular in shape, and does not include the rails that were shown in Figure 8. The pressure plate 23 has formed therein a through-hole 43 at a location corresponding to the corner of a frame of the film 1. Arranged behind the through-hole 43 are six light-emitting element groups 44. As shown in Figures 15A and 15B, these six groups 44 are aligned on a support plate 44A in the lengthwise direction of the film 1. For example, each of these six groups 44 has a squarish B-letter resulting from a seven segment configuration. The light-emitting element groups 44 are pivotally mounted at the centre of a change-over lever 45 by a pin 44B, and one end of the lever 45 is pivotally mounted on a rear cover 141 by a pin 46.

Thus, when the free end of the lever 45 is moved upward and downward around the pin 46 as shown in Figures 15B and 15A. respectively, the light-emitting element groups 44 are moved in the widthwise direction of the film 1. The support plate 44A and, hence, the light-emitting element groups 44, are guided by guide rails 47 so as to move linearly in the widthwise direction of the film 1. The support plate 44A and the light-emitting element groups 44 can be stabilized by a torque spring (not shown) at the end positions shown in Figures 15A and 15B, respectively.

Each of the light-emitting groups 44 is electrically connected through cables 48 and contacts 49 to the system controller 34. The arcuate film guide 18A and the film guide roller 10A are mounted in the rear cover 141. A leaf spring 151 urges the film cassette (not shown) into place in the camera body 11.

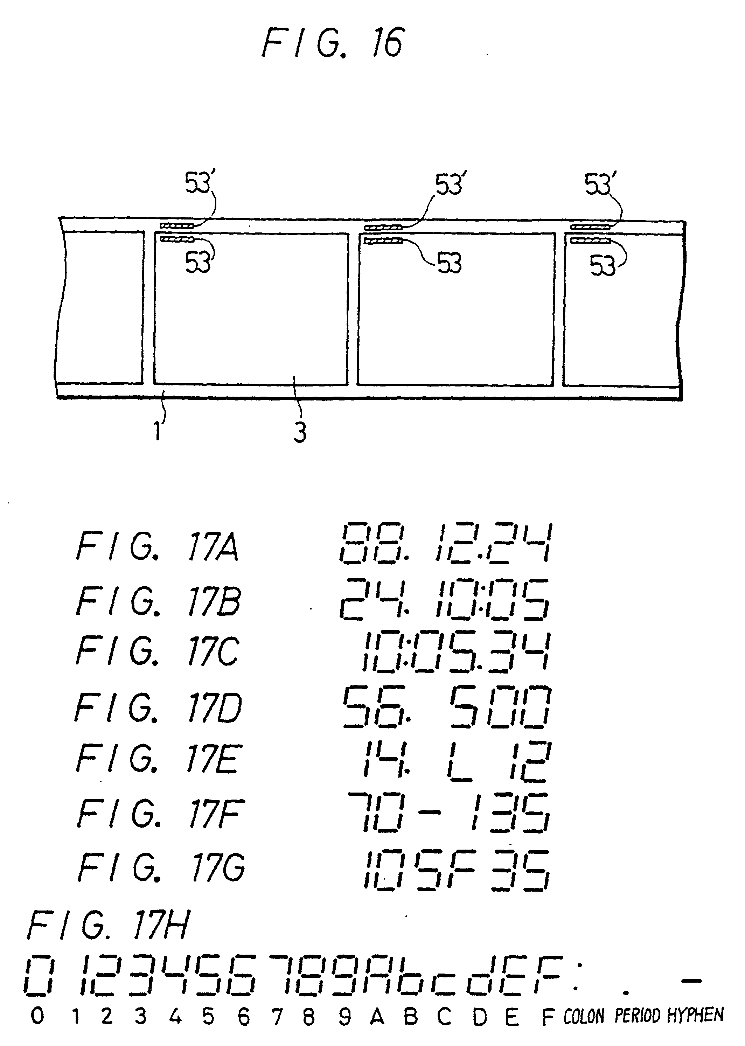

When the photographer takes a picture, if the free end of the lever 45 is lowered as shown in Figure 15A, then the light-emitting element groups 44 are located at a position corresponding to the lower portion of the hole 43, so that data 53 is projected on the area of the frame 3 at a position just along the upper edge thereof, as shown in Figure 16.

If the free end of the lever 45 is moved upward, as shown in Figure 15B, then the light-emitting element groups 44 are located at a position corresponding to the upper portion of the hole 43, so that data 53' is recorded outside the effective area of the frame 3, at a position just along the upper edge thereof, as shown in Figure 16.

Figures 17A to 17G show respective examples of data that can be projected on the film 1 by the six light-emitting element groups 44.

Figure 17A illustrates date data (December 24, 1988); Figure 17B illustrates time and date data (10:05, 24th); and Figure 17C illustrates time data (10:05.34). Figures 17D and 17E illustrate photographic data, for example, aperture 5.6 and shutter speed 1/500 second, and aperture 1.4 and shutter speed long (L), for example, twelve seconds. Figures 17F and 17G illustrate optional data, for example, in which a lens is a zoom lens of 70 to 135mm, and a lens is an f3.5 telephoto lens of 105mm, respectively.

Figure 17H illustrates the font of numerals and characters which can be used as data 53 or 53'. These numerals and characters can be selectively projected inside or outside the frame 3, because the light-emitting element groups 44 are movable by means of the assembly shown in Figures 15A and 15B.

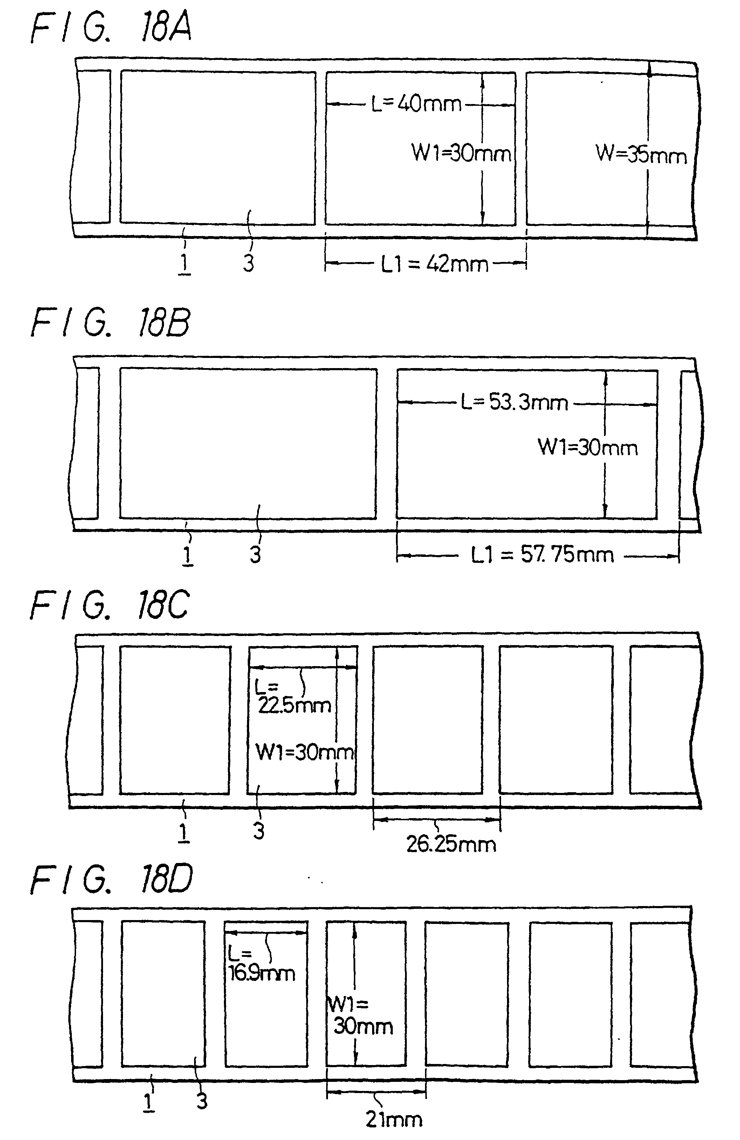

Figures 18A to 18D are diagrams of a photographic format of a film 1 in which the minimum detection value of the film transport amount is selected to be 5.25mm, and Figures 19A to 19D are diagrams of a photographic format of a film 1 in which the minimum detection value of the film transport amount is selected to be 6.28mm. Throughout Figures 18A to 19D, the width W of the film 1 is 35mm, which is equal to the width of existing photographic film, and the film 1 is not provided with perforations.

In the example shown in Figure 18A, a frame 3 defines an effective photographic area (see Figure 1A) whose effective width W1 in the film width direction is 30mm, and whose effective length L in the lengthwise direction of the film 1 is 40mm. A pitch L1 of the frame 3, which is the transport pitch of the film 1, is selected to be 42.0mm. The size and pitch of the frame 3 are selected in accordance with the aspect ratio 3:4 of existing television broadcasting systems.

In the example shown in Figure 18B, the effective width W1 of the effective photographic area or frame 3 is selected to be 30mm, the effective length L is selected to be 53.3mm, and the pitch L1 of the frame 3 is selected to be 57.75mm. These values are selected so as to conform to the standards of a high definition television (HDTV) system (Hi-Vision system). In this case, the aspect ratio of the frame 3 is 9:16.

The values in Figures 18A and 18B are present when the photographer takes a full-sized picture. When, on the other hand, a half-sized picture is taken, the size of the frame 3 is changed to 30mm x 22.5mm, and the transport pitch of the film 1 is changed to 26.5mm for the existing television broadcasting system as shown in Figure 18C, while the size of the frame 3 is changed to 30mm x 16.9mm, and the transport pitch of the film 1 is changed to 21.0mm for the HDTV system as shown in Figure 18D. Thus, even when a half-sized picture is taken, the length of the longer side of the frame 3 is approximately 36mm, which provider an image quality substantially equal to that of the full-sized picture of existing film.

Since the minimum detection value of the film transport amount is selected to be 5.25mm as earlier noted, the film transport amount (transport pitch) in the photographic formats of the film 1 in Figures 18A to 18D is selected to be equal to an integral multiple of the minimum detectable value of film transport, that is 5.25mm. Thus, the film transport pitches in Figures 18A to 18D are calculated as:

$$42.00mm = 5.25mm \times 8$$

$$57.75mm = 5.25mm \times 11$$

$$26.25mm = 5.25mm \times 5$$

$$21.0mm = 5.25mm \times 4$$

The diameter of the detection roller 10A for detecting the film transport amount is 3.34mm as described above.

Other examples of the transport pitches of the frame 3 shown in Figures 18A to 18D are represented in Figures 19A to 19D, respectively. In Figures 19A to 19D, the film transport amounts (transport pitches) are each selected to be equal to an integral multiple of the minimum detectable value of film transport, that is, 6.28mm. Thus, the film transport pitches in Figures 19A to 19D are calculated as:

$$44.0mm \doteqdot 6.28mm \times 7$$

$$56.5mm \doteqdot 6.28mm \times 9$$

$$25.1mm \doteqdot 6.28mm \times 4$$

$$18.8mm \doteqdot 6.28mm \times 3$$

Thus, the diameter of the detection roller 10A for detecting the film transport amount is determined as 4.0mm, and the minimum detection value of the film transport amount is 6.28mm, such that:

$$6.28mm = \pi \times 4.00mm/2$$

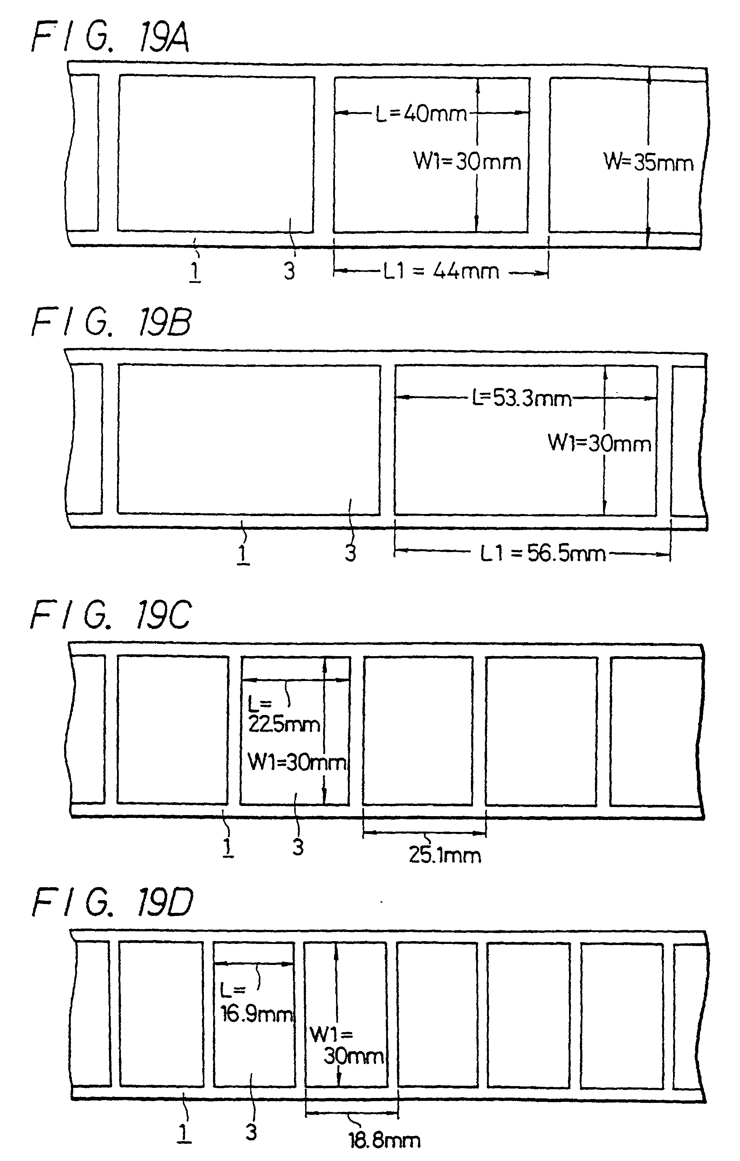

The above-mentioned respective values in Figures 19A and 19B correspond to existing television broadcasting systems and the HDTV system, when a photographer takes a full-sized picture, while the respective values in Figures 19C and 19D correspond similarly for a half-sized picture.

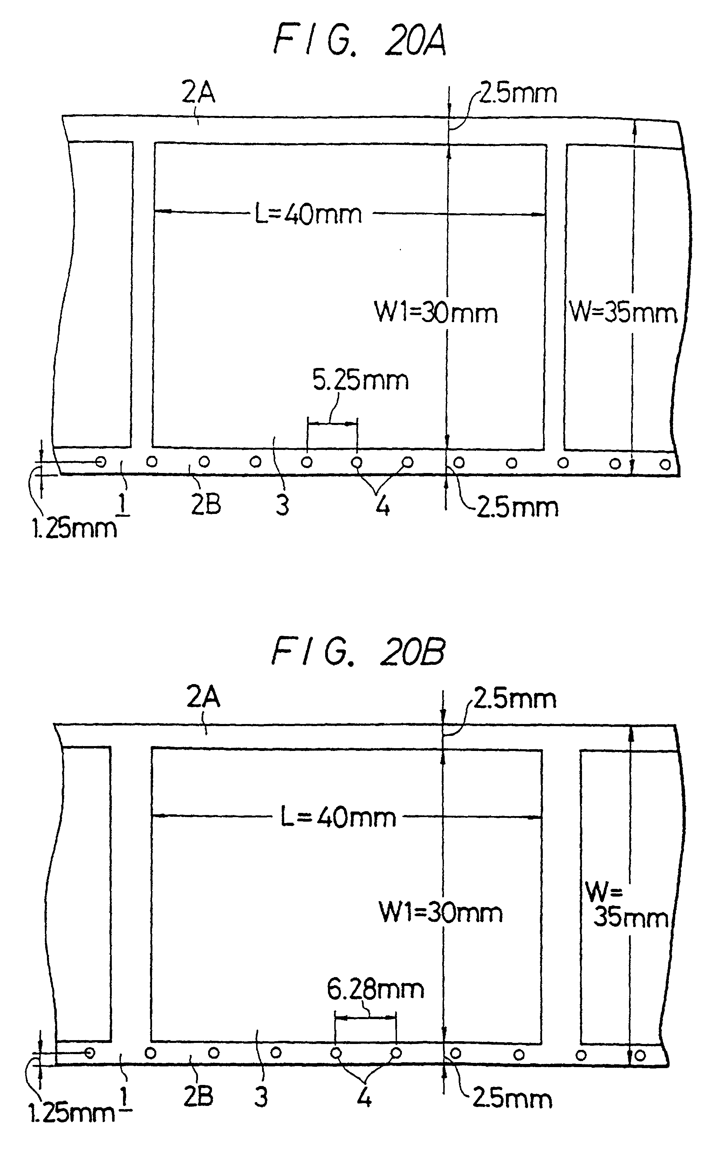

Figures 20A and 208 are further examples of a photographic film 1, in which a plurality of small apertures 4 are formed through the film 1 along the lower non-photographic area 2B. These apertures 4 are used to detect the transport amount of the film 1 shown in Figure 18. The apertures 4 each have a diameter of 1mm, and are aligned from one edge of the film 1 by approximately 1.25mm, namely, on the central line between the edge of the film 1 and the edge of the frame 3 at a predetermined pitch, for example, 5.25mm as shown in Figure 20A. Similarly, for the format of the film 1 shown in Figure 19, the apertures 4 are aligned at a pitch of 6.28mm as shown in Figure 208.

Since the pitch of the apertures 4 is selected to be 5.25mm or 6.28mm on the basis of the above-mentioned background, the format of the film 1 can be suitably applied to an existing television broadcasting system and to the HDTV system, but also it can be applied to both of the full-sized picture and the half-sized picture.

More specifically, when the film 1 is transported in the camera body 11, the number of apertures 4 is counted by the photo-interrupter utilizing infra-red rays. When the count reaches a predetermined value, the transport of the film 1 is stopped, so that the frames 3 are automatically formed on the film 1 at a correct pitch.

In the examples shown in Figures 20A and 20B, the apertures 4 are aligned on the lower non-photographic area 2B, whereas the apertures 4 are aligned on the upper non-photographic area 2A in Figure 2. The reason for this is that the location of the aperture 4 is determined in response to the location of the photo-interrupter, and the means for recording information on the film 1.

Throughout Figures 18A to 18D, 19A to 19D and 20A to 208, the photographic area exposed to light differs from that explained in connection with Figures 3 and 4. This can be achieved by properly matching the size of the rectangular aperture 19 and the lens system 13 (Figures 3 and 4). Moreover, when the apertures 4 are aligned on the opposite side or lower side, they may be located in accordance with the location of the photo-interrupter.

The photographic film 1 may be either a positive or a negative photographic film.

Moreover, photograph data may be recorded in the non-effective photographic area between the edge of the photographic film and the frame, and data indicating the type of the photographic film 1 may be previously recorded therein. Also, only one small aperture 4 may be provided per frame, or the small aperture 4 may be replaced with a magnetic mark or the like, and the magnetic sensor and the photo-transistor may be mounted on the rear cover or on the pressure plate.

## Claims

1. A photographic camera for use with a photographic film which includes, in a non-pick-up area between an edge of the film and frames to be exposed, magnetic marks indicating the frame positions and recorded data indicating the type of the photographic film, the camera including a dark box including an exposure opening (19), a pressure plate (23) for urging the film towards the opening in the dark box, a sensor (32) for detecting the magnetic marks, and a controller (34) for controlling the winding up of the film based on counting an output from the sensor (32), **characterised in that** said sensor (32) is located on the pressure plate.

2. A camera according to claim 1, wherein the controller (34) includes a system controller for receiving a signal from the sensor (32) the system controller being configured to control the winding up of the film so as to position the film such that a frame to be exposed is in registration with the opening (19) in the dark box.

## Patentansprüche

1. Fotografische Kamera für die Verwendung mit einem fotografischen Film, der in einem Nichtaufnahmebereich zwischen einem Filmrand und zu belichtenden Bildern magnetische Markierungen, die Bildpositionen angeben, und aufgezeichnete Daten aufweist, die den Typ des fotografischen Films angeben,

   wobei die Kamera ein Dunkelgehäuse, das eine Belichtungsöffnung (19) enthält, eine Druckplatte (23), die den Film zu der Öffnung in dem Dunkelgehäuse hin drückt, einen Sensor (32) zur Ermittlung der magnetischen Markierungen und eine Steuereinrichtung (34) zur Steuerung des Aufwickelns des Films auf der Grundlage der Zählung eines Ausgangssignals von dem Sensor (32) aufweist,

   **dadurch gekennzeichnet, dass** der genannte Sensor (32) an bzw. auf der Druckplatte festgelegt ist.

2. Kamera nach Anspruch 1, wobei die Steuereinrichtung (34) eine Systemsteuereinrichtung zur Aufnahme eines Signals von dem Sensor (32) enthält, wobei die Systemsteuereinrichtung so aufgebaut bzw. konfiguriert ist, dass das Aufwickeln des Films derart gesteuert wird, dass der Film so positioniert wird, dass ein zu belichtendes Bild in Ausrichtung zu der Öffnung (19) in dem Dunkelgehäuse ist.

## Revendications

1. Appareil de prise de vues photographique destiné à être utilisé avec une pellicule photographique qui comporte, dans une zone de non-prise de vues située entre un bord de la pellicule et les vues à exposer, des repères magnétiques indiquant la position des vues ainsi que des données enregistrées indiquant le type de la pellicule photographique, l'appareil de prise de vues comportant une chambre obscure qui comporte une ouverture d'exposition (19), une plaque de pression (23) servant à presser la pellicule en direction de l'ouverture de la chambre obscure, un capteur (32) servant à détecter les repères magnétiques, et un dispositif de commande (34) servant à commander l'enroulement de la pellicule en fonction du comptage d'un signal de sortie venant du capteur (32), **caractérisé en ce que** ledit capteur (32) est placé sur la plaque de pression.

2. Appareil de prise de vues selon la revendication 1, où le dispositif de commande (34) comporte un dispositif de commande du système servant à recevoir un signal de la part du capteur (32), le dispositif de commande du système étant configuré pour commander l'enroulement de la pellicule de manière à positionner la pellicule de façon qu'une vue à exposer soit en concordance avec l'ouverture (19) ménagée dans la chambre obscure.

## FIG. 1

2.5mm — 2A

L=40mm

W1=30mm    W=35mm

1    2B    3

L1=42mm

2.5mm

## FIG. 2

1.25mm    2A    5.25mm    4    2.5mm

L=40mm

W1=30mm    W=35mm

1    2B    3    2.5mm

L2=42mm

## FIG. 3

## FIG. 4

FIG. 5

FIG. 6

## FIG. 7

## FIG. 8

## FIG. 9

# F I G. 10

## F I G. 11A  Ea

## F I G. 11B  Eb

## F I G. 11C  Pa
## Pb

## F I G. 11D  Pd

EP 1 033 610 B1

# FIG. 12

# FIG. 13

## FIG. 14

## FIG. 15A

## FIG. 15B

# F I G. 16

| | | |
|---|---|---|
| F I G. 17A | 88. 12.24 | |
| F I G. 17B | 24. 10:05 | |
| F I G. 17C | 10:05.34 | |
| F I G. 17D | 56. 500 | |
| F I G. 17E | 14. L 12 | |
| F I G. 17F | 70 - 135 | |
| F I G. 17G | 10 5F 35 | |

## F I G. 17H

0 1234567 89AbcdEF: . —

0 1 2 3 4 5 6 7 8 9 A B C D E F COLON PERIOD HYPHEN

FIG. 18A

FIG. 18B

FIG. 18C

FIG. 18D

*F I G. 19A*

L=40mm

W1=30mm

W=35mm

1   3

L1 = 44mm

*F I G. 19B*

L=53.3mm

W1=30mm

1   3

L1 = 56.5mm

*F I G. 19C*

L=
22.5mm

W1=30mm

1   3

25.1mm

*F I G. 19D*

L=
16.9mm

W1=
30mm

1   3

18.8mm

## F I G. 20A

2A

2.5mm

L=40mm

W1=30mm

W=35mm

5.25mm

1.25mm  1  2B  3  4  2.5mm

## F I G. 20B

2A

2.5mm

L=40mm

W1=30mm

W=
35mm

6.28mm

1.25mm  1  2B  3  4  2.5mm